# EUROPÄISCHE PATENTSCHRIFT

(11) **EP 0 466 043 B1**
(45) Veröffentlichungstag und Bekanntmachung des Hinweises auf die Patenterteilung: **01.06.1994**
(21) Anmeldenummer: 91111203.5
(22) Anmeldetag: 05.07.1991
(51) Int. Cl.: H02B 1/20

(54) **Verteileranlage mit wenigstens zwei untereinander angeordneten Reihen von elektrischen Installationsgeräten in Schmalbauweise**
Distribution installation with at least two rows of electrical apparatus of a narrow type
Installation de distribution comprenant au moins deux rangées d'appareils électriques de type étroit

(30) Priorität: 09.07.1990 DE 4021826
(43) Veröffentlichungstag der Anmeldung: 15.01.1992
(73) Patentinhaber: ABB PATENT GmbH, 68309 Mannheim (DE)
(72) Erfinder: Velten, Walter, W-6830 Schwetzingen (DE); Schmitt, Hermann, W-6801 Edingen (DE); Leible, Erwin, W-6932 Hirschhorn (DE)
(74) Vertreter: Rupprecht, Klaus, Dipl.-Ing.

(56) Entgegenhaltungen:
- EP-A- 0 063 970
- EP-A- 0 109 881
- FR-A- 2 438 359

## Beschreibung

Die Erfindung bezieht sich auf eine Verteileranlage mit wenigstens zwei, vorzugsweise horizontal verlaufenden, untereinander angeordneten, jeweils auf einem Tragorgan befestigten Reihen von elektrischen Installationsgeräten in Schmalbauweise, deren Stromeinspeisung über ein isolierend abgestütztes Stromschienensystem und zugeordnete Steckorgane erfolgt.

Bei der konventionellen Installationstechnik für Verteileranlagen, wie sie für Einzelhaushalte, Mehrfamilienhäuser, Bürogebäude und vergleichbare Baulichkeiten vorgesehen sind, werden die einzelnen Installationsgeräte über eine aufwendige Einzelverdrahtung stromeingangsseitig mit Spannung versorgt. Diese Verdrahtungstechnik ist sehr zeitaufwendig und kann in aller Regel nicht fabrikseitig vorgefertigt werden.

Zur Vereinfachung der Installationsarbeiten am Aufstellungsort und somit zur Kostenverbilligung ist man zunehmend dazu übergegangen, sogenannte Verdrahtungshilfen fabrikseitig vorzufertigen, beispielsweise solche in Gestalt von Kammschienen, Phasenschienen und dergleichen. Für den zur Rede stehenden Zweck ist beispielsweise ein Sammelschienenblock bekannt geworden, wie er dem DE-GM 87 00 153 zu entnehmen ist. Ein solcher dreipoliger Sammelschienenblock dient der Spannungsversorgung von Schaltgeräten, die also alle gleichzeitig mit den ihnen zugeordneten Stromphasen verbunden werden können. Die einzelnen Sammelschienen, die - gegeneinander isoliert - in einem mehrwandigen Kastenprofil aus Isolierstoff angeordnet und gehalten sind, weisen in regelmäßigen Abständen Anschlußlaschen auf, die von der Anschlußseite der einzelnen Installationsgeräte her unmittelbar in deren Schraubanschlußbuchsen eingefügt werden. Eine derartige Anschlußtechnik ist, insbesondere wenn es sich um Verteileranlagen mit einer größeren Anzahl von Installationsgeräten handelt, durchaus zeitsparend und zudem auch noch platzsparend. Ein Nachteil hierbei ist aber darin zu sehen, daß bei sogenannten Nachinstallationen die gesamte zugangsseitige Verdrahtung aller auf einer Tragschiene angeordneten und mit dem Sammelschienenblock verbundenen Installationsgeräte gelöst werden muß, um die zusätzlichen Installationsgeräte in das System mit einfügen zu können. Gleiches gilt für den Fall, daß einzelne Installationsgeräte ausgewechselt werden müssen, sei es deshalb, weil sie defekt sind, oder dann, wenn beispielsweise anstelle eines Installationsgerätes mit einer geringeren Nennleistung ein solches mit einer höheren Nennleistung eingesetzt werden soll.

Eine Niederspannungsverteilung, bei welcher der eben genannte Nachteil vermieden wird, ist der EP 0 229 590 A1 zu entnehmen. Bei dieser bekannten Kontstruktion ist es vorgesehen, die aufzunehmenden Installationsgeräte nahe ihrer Unterseite bzw. ihrer Befestigungsebene mit schwalbenschwanzförmigen Aussparungen zu versehen, in welche jeweils sowohl eine sogenannte Stecktulpe, d. h. ein klemmbackenartiges Kontaktorgan, als auch ein Arretierschieber einfügbar sind. Sowohl diese Aussparung als auch der Arretierschieber sind mit quer zum Verlauf der Aussparung versehenen Ausnehmungen versehen, in welche seitliche Führungsplättchen der Stecktulpe einzugreifen vermögen. In einem gesonderten Arbeitsgang, der vorzugsweise am Aufstellungsort der Niederspannungsverteilung vorzunehmen ist, können diese Stecktulpen in unterschiedlichen Positionen am Installationsgerät befestigt und mittels des Arretierschiebers fixiert werden. Die Stecktulpen selbst sind mit flexiblen Leitungen verbunden, welche in eine Anschlußkontaktstelle des jeweiligen Installationsgerätes einfügbar und hierin kontaktierend befestigbar sind. Diese Stecktulpen kontaktieren nun mit einem Schienensystem, das in einem Stecksockel gehalten ist. Diese Konstruktion ist, was die Halterung und kontaktierende Verbindung der Stecktulpen betrifft, aufwendig, und zwar sowohl bezüglich der erforderlichen Teile als auch der Notwendigkeit, diese Stecktulpen jeweils in die erwünschte Position bringen zu müssen, was - wie oben bereits ausgeführt - in aller Regel erst am Aufstellungsort geschehen kann oder wird. Zu nennen ist aber noch ein anderer Nachteil dieser bekannten Konstruktion, der insbesondere dann augenfällig wird, wenn innerhalb einer Verteileranlage zwei oder gar deutlich mehr als zwei Reihen von Installationsgeräten anzuordnen sind. In diesem Falle benötigt jede der einzelnen Reihen von Installationsgeräten einen gesonderten Stecksockel und jeder Stecksockel benötigt eine eigene Stromeinspeisung für die im Stecksockel gehaltenen Stromschienen. Diese zuletzt genannten Nachteile gelten übrigens auch bei der Verwendung von Sammelschienenblöcken entsprechend dem oben bereits genannten DE-GM 87 00 153.

Ausgehend von dem genannten Stand der Technik stellt sich die vorliegende Erfindung zur Aufgabe, eine Verteileranlage für zwei oder mehrere Reihen von aufzunehmenden Installationsgeräten mit einer Stromeinspeisung über Stromschienen zu schaffen, welche die geschilderten Nachteile vermeidet und hinsichtlich des erforderlichen Teile- und Montageaufwandes möglichst preisgünstig und auch platzsparend herstellbar ist. Konkret ausgedrückt, soll die zu schaffende Verteileranlage so ausgebildet sein, daß eine Ergänzung der vorhandenen Installationsgeräte oder ein Auswechseln vorhandener Installationsgeräte auf einfache Weise möglich ist, ohne einen Stromschienenblock vorübergehend entfernen oder mindestens die Schraubverbindungen benachbarter Installationsgeräte lösen zu müssen, es soll weiterhin vermieden werden, am Aufstellungsort noch Handhabungen an den einzelnen Installationsgeräten vornehmen zu müssen, wenn man von der Herstellung einer Klemmverbindung absieht, und schließlich soll vermieden werden, jede einzelne Reihe von Installationsgeräten mit gesonderten Stromeinspeisungen ausstatten zu müssen.

Dieses vielschichtige und in gewisser Weise anspruchsvolle Ziel wird erfindungsgemäß dadurch erreicht, daß für die Halterung des Stromschienensystems ein zwei oder mehreren Reihen von Installationsgeräten gemeinsam dienender Verteilersockel vorgesehen wird, welcher mit vertikal bzw. quer zu den Installationsgeräte-Reihen verlaufenden Aufnahmetaschen und darin angeordneten Stromschienen ausgestattet ist, weiterhin dadurch, daß die Anzahl der Aufnahmetaschen in diesem Verteilersockel der höchstmöglichen Anzahl von in einer Reihe anordendbaren Installationsgeräten gleicht, und schließlich ist noch vorgesehen, daß die kontaktierende Verbindung zwischen den einzelnen Installationsgeräten und den zugeordneten Stromschienen jeweils mittels eines gesonderten Steckorgans erfolgt, welches mit seinem einen Längsende in eine Kontaktanschlußstelle eines Installationsgerätes einfügbar und mit seinem anderen Ende mit der besagten Stromschiene kontaktierend zusammensteckbar gestaltet ist. Eine derartige Konstruktion ist insbesondere in jenen Fällen sehr zweckmäßig, in denen nicht nur zwei, sondern mehrere oder sogar recht viele Reihen von Installationsgeräten innerhalb einer Verteileranlage untereinander anzuordnen und mit Stromeinspeisungen zu versehen sind. Es bedarf nämlich in diesem Falle - jedenfalls bei Verteileranlagen mit "normaler", d. h. nicht übermäßig großer Breite - nur eines einzigen Verteilersockels, dessen einzelne Stromschienen auch nur an einer Stelle mit einer Phaseneinspeisung verbunden werden müssen, völlig unabhängig davon, wie groß die Anzahl der untereinander gelegenen Reihen von Installationsgeräten ist. Außerdem ist es ohne größere Schwierigkeiten möglich, jedes einzelne der Installationsgeräte aus jeder Reihe herauszulösen und gegen ein anderes Gerät zu ersetzen bzw. auszutauschen. Zwar geht diese Lösung in einem gewissen Ausmaß zu Lasten der gesamten Bauhöhe, was jedoch durch die erzielbaren Montageerleichterungen am Aufstellungsort und, wie eben bereits gesagt, durch die einfache Auswechselbarkeit einzelner Installationsgeräte, durchaus in Kauf genommen werden kann. Eine derartige Verteileranlage kann weitgehend fabrikmäßig vorgefertigt werden, einschließlich der Verbindung der einzelnen Stromschienen mit Anschlüssen für die Stromeinspeisung.

Die Aufgabe konn ebenfalls durch die Merkmale des Anspruchs 17 gelöst werden. In diesem Anspruch wird vorgeschlagen, zur Vergrößerung der Anzahl von in einer Reihe anordenbaren Installationsgeräten zwei oder mehrere Verteilersockel nebeneinanderliegend innerhalb einer Verteileranlage anzuordnen. Auf diese Weise ist die Anzahl der in einer Reihe anordenbaren Installationsgeräte verdoppelbar oder sogar noch weiter vergrößerbar. Hierdurch kann auch vermieden werden, für unterschiedlich breite Verteileranlagen unterschiedliche Verteilersockel herstellen und auf Lager halten zu müssen und dennoch dieses vorgeschlagene System für unterschiedlich breite Verteileranlagen verwenden zu können.

Eine vorteilhafte Weiterbildung des Erfindungsgedankens ist in dem Vorschlag zu sehen, den Verteilersockel von einem entsprechend dem jeweiligen Bedarf abgelängten Endlosprofil aus Isolierstoff zu bilden, dessen Längsenden im übrigen mit einer Abdeckung oder mit einer Kappe versehen werden können, wenn der gebotene Berührungsschutz dieses wünschenswert macht. Ein entsprechend gestaltetes Endlosprofil ist, abgesehen einmal von den Werkzeugkosten, preiswert und hinreichend maßhaltig herzustellen und bedarf, außer dem Ablängen und eventuell der Anbringung von Befestigungsbohrungen oder dergleichen, keiner weiteren Nacharbeit.

Eine vorteilhafte Weiterbildung des zuletzt genannten Ausgestaltungsgedankens ist darin zu sehen, das Endlosprofil für die Bildung des Verteilersockels mit seitlich vorstehenden flanschartigen Profilausformungen zu gestalten, die sowohl der Befestigung des Verteilersockels innerhalb der Verteileranlage, als auch zugleich der Befestigung von Tragorganen für die Halterung der einzelnen Reihen der Installationsgeräte dienen können. Der Mehraufwand für solche flanschartigen Profilausführungen ist vernachlässigbar gering, es können hiermit aber zusätzliche Teile, die sonst eventuell erforderlich wären, von vornherein eingespart werden.

Eine zweckmäßige Ausgestaltung des Erfindungsgedankens kann darin gesehen werden, die im Verteilersockel vorgesehenen Aufnahmetaschen für die Aufnahme der Stromschienen auf ihrer den zu kontaktierenden Installationsgeräten zugewandten Seite mit einer dem Durchtritt der Steckorgane dienenden schlitzförmigen Taschenöffnung zu versehen, die gegenüber dem übrigen Taschenquerschnitt verengt ist. Auf diese Weise können in die Aufnahmetaschen eingefügte Stromschienen in ihrer Lage fixiert und zugleich gegen ein Heraustreten gesichert werden. Außerdem wird durch eine verengte Taschenöffnung der stets erwünschte Berührungsschutz verbessert.

Eine andere vorteilhafte Ausgestaltung der vom Erfindungsgegenstand umfaßten Teile ist in dem Vorschlag zu sehen, die Stromschienen mit einer U-förmigen oder C-förmigen Querschnittskontur auszubilden. Hierbei können die freien Enden der U-förmigen oder C-förmigen Querschnittskontur einen Abstand voneinander aufweisen, der mindestens geringfügig kleiner ist als die Breite bzw. Dicke eines Steckorgans, welches zwischen diese freien Enden bzw. Schenkel der so gestalteten Stromschiene einfügbar sind. Hierdurch ist eine Klemmwirkung erzielbar, die durchaus sehr erwünscht ist, vorteilhaft kommt aber hinzu, daß die Ausbildung der einzelnen Steckorgane einfacher gestaltet werden kann, d. h. keiner gabelförmigen, zueinander federnder Klemmbacken oder dergleichen bedürfen.

Eine spezielle, bezüglich der Montage und eventuell auch einer Materialeinsparung vorteilhafte Gestaltung der Stromschienen ist in dem Vorschlag zu sehen, diese aus einem in der Ausgangsform ebenen Blechmaterial herzustellen und dieses Ausgangsmaterial in ein herzformartiges Querschnittsprofil zu formen, wobei beide seitlichen Randungsbereiche der Ausgangsform in das Profilinnere gerichtet enden und voneinander einen Abstand aufweisen. Derartige Stromschienen lassen sich bei der Montage mit dem zugeordneten Verteilersockel in einem hinreichenden Ausmaß seitlich zusammendrücken, so daß sie durch eine schlitzförmige Taschenöffnung mit einem nach außen hin verengten Taschenquerschnitt hindurch in die Taschen eines Verteilersockels einfügbar sind. Bei einer entsprechenden Bemessung der Stromschienen kann erreicht werden, daß sie im Inneren der besagten Taschen an deren seitlichen Wandungen selbsthaftend anliegen. Ein weiterer Vorteil derart ausgebildeter Stromschienen ist darin zu sehen, daß sie eine vergleichsweise große Oberfläche aufweisen, wodurch ein günstigerer Wärmeabfuhreffekt erzielt werden kann.

Ein anderer vorteilhafter Ausgestaltungsvorschlag bezieht sich auf die Ausbildung der Steckorgane zur kontaktierenden Verbindung zwischen einem Installationsgerät und einer zugeordneten Stromschiene. Diese Steckorgane können eine weitgehend starre, etwa im Bereich ihrer Längsmitte abgewinkelte Formgebung aufweisen, wobei es vorgesehen ist, sie mit ihrem einen freien Ende in die Kontaktanschlußstelle des zugeordneten Installationsgerätes einzufügen und mit ihrem anderen freien Ende mit der entsprechenden Stromschiene zusammenzustecken. Solche Steckorgane können nach der Montage der einzelnen Installationsgeräte diesen und den zugeordneten Stromschienen angefügt und bei Bedarf von diesen wieder entfernt werden, ohne benachbarte Geräte bzw. deren Steckorgane in irgendeiner Weise zu beeinträchtigen.

Einem konkreten Gestaltungsvorschlag zufolge können diese Steckorgane aus einem im Querschnitt runden oder quadratischen Ausgangsmaterial hergestellt werden, wobei die freien Enden zu abgeflachten oder verjüngten Kontaktierungsbereichen verformt sind. Einem alternativen Gestaltungsvorschlag zufolge können die Steckorgane als in ihrer Ausgangsform winkelförmige Stanzteile aus einem Blech- oder Bandmaterial hergestellt werden, deren einer Schenkel anschließend - unter Verdrillung des Eckbereiches - um ca. 90° abgebogen werden. Bei derartigen Steckorganen erübrigt es sich, die Kontaktierungsbereiche abzuflachen. Für beide Gestaltungsformen von Steckorganen kann es vorteilhafterweise vorgesehen werden, die wesentlichen Erstreckungsebenen ihrer abgeflachten bzw. ebenen Kontaktierungsbereiche senkrecht zueinander verlaufen zu lassen, und zwar derart, daß - in montierter Lage - der dem Installationsgerät zugeführte Kontaktierungsbereich parallel zur Befestigungsebene des Installationsgerätes verläuft, hingegen der einer Stromschiene zugeführte Kontaktierungsbereich sich parallel zu den seitlichen Wandungen des Installationsgerätes erstreckt. Eine derartige Anordnung der abgeflachten bzw. ebenen Kontaktierungsbereiche der einzelnen Steckorgane begünstigt deren Montage und gegebenenfalls deren Demontage im Falle der Notwendigkeit, ein Installationsgerät auszuwechseln.

In Verteileranlagen der zur Rede stehenden Art müssen häufig außer den nebeneinander aufgereihten Installationsgeräten in Schmalbauweise auch solche Installationsgeräte aufgenommen werden, deren Gestalt und Anschlußmöglichkeit abweicht von den übrigen Installationsgeräten. Hierbei kann es sich beispielsweise um Klingeltransformatoren, Zeitglieder für eine Treppenhausbeleuchtung, um Funktionsorgane für eine Alarmanlage oder dergleichen Funktionselemente handeln. Für die kontaktierende Verbindung solcher Installationsgeräte mit den Stromschienen werden - gemäß einem zweckmäßigen Weiterbildungsvorschlag - Steckorgane in Form von kastenförmigen Schraubanschlußklemmen empfohlen, von denen jeweils ein Messerkontakt zur Kontaktierung einer Stromschiene ausgeht. In die Schraubanschlußklemme eines solchen Steckorgans kann nun das eine Ende eines leicht verformbaren Anschlußdrahtes oder einer flexiblen Anschlußlitze eingefügt und hierin kontaktierend befestigt werden. Das andere Ende dieses Drahtes bzw. dieser Litze ist der Kontaktanschlußstelle eines beliebig gestalteten Installationsgerätes zuzuführen, d. h. auch für solche, gestaltungsmäßig von einer Norm abweichenden Installationsgeräte ist eine einfache Kontaktierungsmöglichkeit mit den besagten Stromschienen geboten.

Die einzelnen Stromschienen einer Verteileranlage bedürfen einer Stromeinspeisung, d. h. einer kontaktierenden Verbindung mit einer Phase des der Verteileranlage zugeführten Stromnetzes. Diese Stromeinspeisung kann beispielsweise über Installationsgeräte in Form von Leitungsschutzschaltern erfolgen. Für die oben vorgeschlagene Konzeption würde dieses bedeuten, daß eine komplette Reihe von Leitungsschutzschaltern aufgewendet werden muß, um alle einzelnen Stromschienen mit Spannung zu versorgen. Dieses ist, was den Gerätebedarf betrifft, recht aufwendig, insbesondere dann, wenn die Anzahl der in einer Verteileranlage vorhandenen Reihen von Installationsgeräten nicht sehr groß ist. Eine zweckmäßige Weiterbildung des Erfindungsgedankens ist nun darin zu sehen, zur Stromversorgung des Stromschienensystems Steckbrücken vorzusehen, die jeweils aus einer vorzugsweise in Gestalt einer kastenförmigen Schraubanschlußklemme gebildeten Anschlußstelle bestehen, welch letztere mit einem sich seitlich erstreckenden, schienenartigen Brückenglied einstückig oder kontaktierend fest verbunden ist, von dem wenigstens zwei Messerkontakte zur Kontaktierung einer entsprechenden Anzahl von Stromschienen ausgehen. Einer konkreten Ausbildungsform zufolge gehen von diesem Brückenglied wenigstens drei Messerkontakte aus, die so voneinander beabstandet und positioniert sind, daß sie jeweils jede dritte Stromschiene des Stromschienensystems zu kontaktieren vermögen. Auf diese Weise ist es möglich, mit insgesamt drei Steckbrücken wenigstens neun Stromschienen mit einer Stromeinspeisung auszustatten. Derartige Steckbrücken sind, was den Geräteaufwand betrifft, durchaus preisgünstiger als die Verwendung von Leitungsschutzschaltern zur Einspeisung, außerdem ist der erforderliche Platzaufwand innerhalb der Verteileranlage geringer.

Eine zweckmäßige Ausgestaltung der eben genannten Steckbrücken ist in dem Vorschlag zu sehen, diese - ausgenommen die vorgesehenen Kontaktierungsbereiche der Anschlußstelle und der Messerkontakte - ringsum mit Isolierstoff zu ummanteln. Auf diese Weise ist ein in jedem Falle erwünschter Berührungsschutz gegeben, der auch dann vorteilhaft ist, wenn diese Steckbrücken durch eine entsprechende Isolierstoffplatte oder dergleichen innerhalb der Verteileranlage abgedeckt sind.

Die stromleitenden Teile einer solchen Steckbrücke können beispielsweise einstückig von einem entsprechend geformten Strangpreßteil abgelängt sein. Einem vorteilhaften Ausgestaltungsvorschlag zufolge kann es aber auch vorgesehen sein, sowohl die Anschlußstelle, als auch das Brückenglied, als auch schließlich die von diesem Brükkenglied ausgehenden Messerkontakte aus einem einzigen Metallband, beispielsweise aus einem Kupfer- oder einem Aluminiumband, herzustellen, welch letzteres entsprechend abgewinkelt und gefaltet und sodann mit einem Isolierstoffmantel umspritzt ist. Derartig gestaltete Steckbrücken können, jedenfalls dann, wenn der Bedarf an Steckbrücken nicht übermäßig groß ist, in der Herstellung letztendlich preisgünstiger sein als die Verwendung von einem entsprechenden Strangpreßprofil. Letzteres deshalb, weil die Breite der einzelnen Steckbrücken nur relativ gering sein muß, und aus einem beispielsweise zwei Meter langen Strangpreßprofil bereits einhundert oder noch mehr an Steckbrücken-Teilen - durch Ablängen - hergestellt werden können.

Eine vorteilhafte Weiterbildung des zuletzt genannten Gedankens, für die Herstellung eines Brückengliedes ein Metallband zu verwenden, wird vorgeschlagen, die beiden Bandbereiche der durch Zusammenfalten des Metallbandes gebildeten einzelnen Messerkontakte nicht unmittelbar aneinanderliegen zu lassen, sondern vielmehr in einem Abstand voneinander zu belassen. Dieser Abstand kann sich in der Größenordnung von einem Vierteil bis zum Dreifachen der Banddicke erstrecken und sich dementsprechend um diesen Betrag, ohne sich zu verformen, federnd zueinander biegen lassen. Auf diese Weise ist die Bildung eines federnden Messerkontaktes möglich, ohne hierfür den Aufwand erwähnenswert zu vergrößern.

Verteileranlagen der zur Rede stehenden Art können durchaus unterschiedliche Breiten aufweisen.

Anhand von in den Zeichnungen dargestellten Ausführungsbeispielen und den nachfolgenden Erläuterungen hierzu sollen der Erfindungsgedanke und seine vorteihaften Ausbildungsmöglichkeiten noch einmal erklärt und verdeutlich werden.

Es zeigen:
- Figur 1: in perspektivischer Sicht eine nach unten hin abgebrochene Verteileranlage mit mehreren darin angeordneten Reihen von Installationsgeräten,
- Figur 2: in perspektivischer Darstellung einen nach oben hin abgeschnittenen Verteilersockel einer Verteileranlage mit einer auf diesem Verteilersockel angeordneten Reihe von Installationsgeräten und mit Steckbrücken zur Stromversorgung von Stromschienen,
- Figur 3: eine erste Ausführungsmöglichkeit für ein Steckorgan,
- Figur 4: eine weitere Möglichkeit für die Ausbildung eines Steckorgans,
- Figur 5: eine dritte Gestaltungsmöglichkeit für ein Steckorgan, und zwar dessen Ursprungsform und - darunterliegend - dessen Gebrauchsform,
- Figur 6: ein weiteres Steckorgan, und zwar für die Kontaktierung von Installationsgeräten mit einer bezüglich der Kontaktierung anders als die dargestellten Installationsgeräte ausgebildeten Geräten oder Funktionsorganen,
- Figur 7: eine perspektivisch dargestellte Steckbrücke für die Stromeinspeisung der Stromschienen,
- Figur 8: das abgelängte Stück eines Stranpreßprofiles, wie es für eine Steckbrücke gemäß Figur 7 Verwendung finden kann,
- Figur 9: in einer Perspektive eine längs aufgeschnittene Steckbrücke, deren metallische Kontaktbereiche aus einem Metallband hergestellt sind,
- Figur 10: in perspektivischer Sicht eine - in der Mitte ausgebrochene - Stromschiene und
- Figur 11: im Schnitt einen nach beiden Seiten hin abgebrochenen Bereich eines Verteilersockels mit einer darin angeordneten Stromschiene gemäß Figur 10.

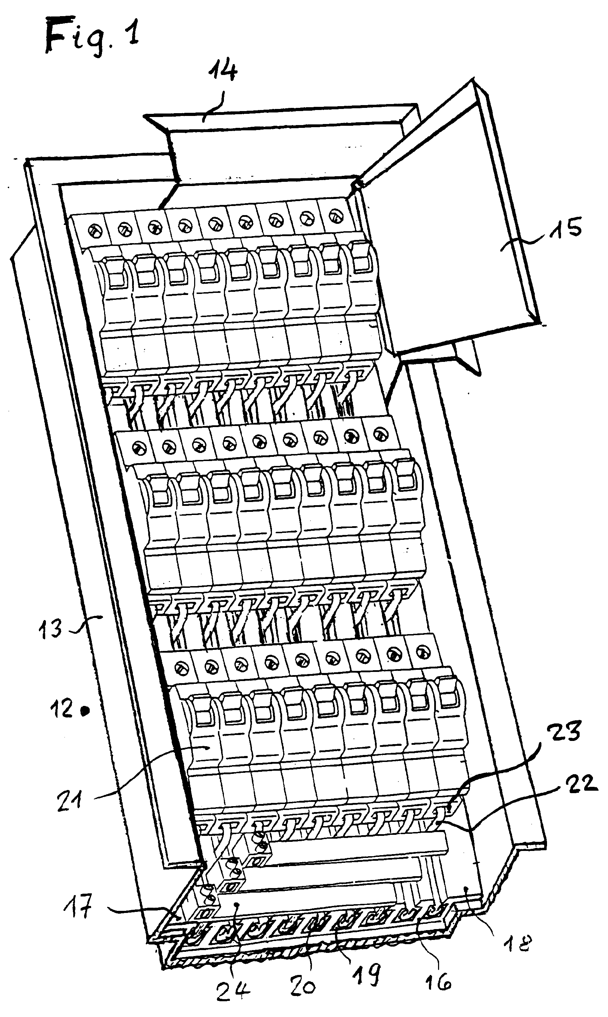

In perspektivischer Darstellung veranschaulicht die **Figur 1** eine nach unten hin abgeschnittene Verteileranlage 12, die aus einem in ein Mauerwerk einzulassenden Gehäuse 13, einem (abgeschnitten gezeigten) Blendrahmen 14 und aus einer (ebenfalls abgeschnitten gezeigten) frontseitigen Tür 15 besteht. Im Inneren dieser Verteileranlage 12 ist ein Verteilersockel 16 mit seitlich vorstehenden, flanschartigen Profilausformungen 17 und 18 angeordnet und befestigt. Dieser Verteilersokkel 16 wird von einem Strangpreßprofil aus Isolierstoff gebildet und weist mehrere - im vorliegenden Falle neun - vertikal verlaufende Aufnahmetaschen 19 auf. In diesen Aufnahmetaschen 19 sind jeweils eine Stromschiene 20 angeordnet. Oberhalb der besagten flanschartigen Profilausformungen 17 und 18 sind (in dieser Darstellung nicht erkennbare) Tragorgane befestigt, auf denen nun, wie aus dieser Darstellung zu entnehmen ist, drei Reihen von Installationsgeräten 21 in Schmalbauweise rastend gehalten sind. Die kontaktierende Verbindung zwischen den einzelnen Installationsgeräten 21 und den Stromschienen 20 erfolgt jeweils mittels eines gesonderten, etwa winkelig abgebogenen Steckorgans 22, welches mit seinem einen Ende in eine Kontaktanschlußstelle 23 des Installationsgerätes 21 und mit seinem anderen Ende mit der zugeordneten Stromschiene (20) kontaktierend zusammensteckbar ist.

Zur Stromversorgung der einzelnen Stromschienen 20 des Stromschienensystem dienen im vorliegenden Falle drei Steckbrücken 24, die zwar alle völlig gleich ausgebildet sind, die jedoch seitlich zueinander versetzt montiert sind. Weitere Merkmale dieser Steckbrücken 24 sollen nachfolgend noch erläutert werden.

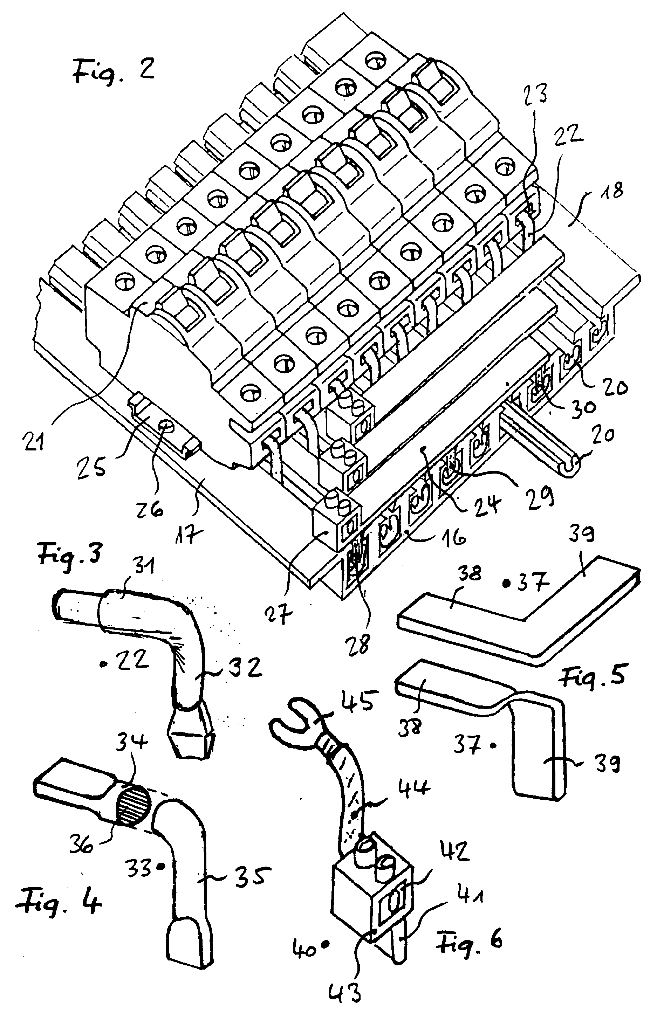

Die in der Figur 1 zuunterst gelegene Reihe der Installationsgeräte 21 ist - in etwas vergrößertem Maßstab - noch einmal in der **Figur 2** veranschaulicht. Erkennbar in dieser Darstellung sind außer den Installationsgeräten 21 ein Tragorgan 25 in Gestalt einer sogenannten Hutprofilschiene sowie der Verteilersockel 16, die Steckbrücken 24 und die Stromschienen 20, von denen eine aus Anschauungsgründen herausgezogen gezeigt ist. Die Installationsgeräte 21 sind, was allerdings nicht unmittelbar erkennbar ist, auf dem Tragorgan 25 aufgerastet und somit nebeneinander gehalten. Dieses Tragorgan 25 wiederum ist auf den seitlich vorstehenden, flanschartigen Profilausformungen 17 und 18 des Verteilersokkels 16 - mittels Schraubelementen 26 - befestigt. Über die bereits erwähnten Steckorgane 22 sind die einzelnen Installationsgeräte 21 mit den Stromschienen 20 kontaktierend verbunden, wobei - wie bereits oben ausgeführt - jeweils ein Ende des Steckorgans 22 in die Kontaktanschlußstelle 23 des zugeordneten Installationsgerätes 21 eingefügt und das andere Ende des Steckorgans 22 mit der zugeordneten Stromschiene 20 zusammengesteckt ist. Wie insbesondere bei der herausgezogen gezeigten Stromschiene 20 erkennbar ist, haben diese Stromschienen ein etwa U-förmiges Querschnittsprofil. Zwischen die beiden freien Schenkel dieses Profils fügt sich das letztgenannte Ende eines Steckorgans 22 ein. Bezogen auf eine Verteileranlage 12 gemäß Figur 1, kontaktiert eine jede der Stromschienen 20 in jeder der Reihen von Installationsgeräten ein Steckorgan 22.

Die bereits erwähnten Steckbrücken 24 weisen an ihrem einen Längsende jeweils eine Anschlußstelle in Gestalt einer kastenförmigen Schraubanschlußklemme 27 auf, in welcher ein den Strom einspeisendes Kabel kontaktierend befestigbar ist. Von den den Schraubanschlußklemmen 27 abgewandten Breitseiten der Steckbrücken 24 ragen jeweils drei Messerkontakte 28, 29 und 30 hervor, welche in entsprechend zugeordnete Stromschienen 20 haftend einfügbar sind. Hierbei ist der Abstand der einzelnen Messerkontakte 28, 29 und 30 voneinander so gewählt, daß jeweils eine erste und sodann jede dritte Stromschiene (20) kontaktiert werden kann. Im vorliegenden Falle werden von den drei Steckbrücken 24 also insgesamt neun Stromschienen 20 mit einer Netzspannung versorgt. Mittels dieser Steckbrücken 24 wird, wie oben bereits angedeutet, nicht nur die in dieser Figur 2 erkennbare Reihe von Installationsgeräten 21 mit Spannung versorgt, sondern auch alle übrigen Reihen von Installationsgeräten innerhalb einer Verteileranlage, wenn die Stromschienen 20 entsprechend lang bemessen sind.

Nun zu den Steckorganen 22, die in den Figuren 1 und 2 erkennbar und bereits erwähnt worden sind. Ein solches Steckorgan 22 veranschaulicht die **Figur 3** in einer perspektivischen Darstellung. Es ist erkennbar, daß dieses Steckorgan 22 eine winkelige Gestalt mit zwei Schenkeln 31 und 32 aufweist, die in ihren zueinander gerichteten und im Eckbereich miteinander verbundenen Längsbereichen einen runden Querschnitt aufweisen. Auch das freie Ende des Schenkels 31 hat eine runde Querschnittskontur, die jedoch im Außendurchmesser kleiner gestaltet ist als der vorherige Längsbereich dieses Schenkels 31. Das freie Ende des Schenkels 32 hingegen weist eine (beispielsweise gehämmerte) Abflachung auf, die sich in ihrer Dicke zum äußersten Ende hin ein wenig verjüngt und deren Dicke im übrigen so bemessen ist, daß dieses abgeflachte, etwa spatenförmige freie Ende des Schenkels 32 in eine Stromschiene 20, wie sie der Figur 2 zu entnehmen ist, haftend eingefügt werden kann.

Die **Figur 4** zeigt, wiederum in perspektivischer Darstellung, ein Steckorgan 33, dessen Ausgangsform auch hier wieder von einem Rundmaterial gebildet und etwa in der Längsmitte abgewinkelt worden ist. Dementsprechend weist dieses Steckorgan 33 ebenalls zwei Schenkel 34 und 35 auf, von denen der eine (34) strekkenweise aufgetrennt gezeigt ist, um die runde Querschnittskontur, die mit der Ziffer 36 versehen ist, anschaulich zu machen. Im Gegensatz zum in der Figur 3 gezeigten Steckorgan 32 weist dieses Steckorgan 33 an beiden freien Schenkelenden Abflachungen auf, die beide als Kontaktierungsbereiche dienen. Kennzeichnend für dieses Steckorgan 33 ist es, daß die wesentlichen Erstreckungsebenen der abgeflachten Kontaktierungsbereiche senkrecht zueinander verlaufen, und zwar derart, daß - in montierter Lage des Steckorgans 33 - der einem Installationsgerät 21 (siehe Figuren 1 oder 2) zuzuführende Kontaktierungsbereich parallel zur Befestigungsebene des Installationsgerätes 21 verläuft, hingegen der einer Stromschiene 20 (siehe wiederum die Figuren 1 oder 2) zuzuführende Kontaktierungsbereich sich parallel zu den seitlichen Wandungen der Installationsgeräte 21 erstreckt.

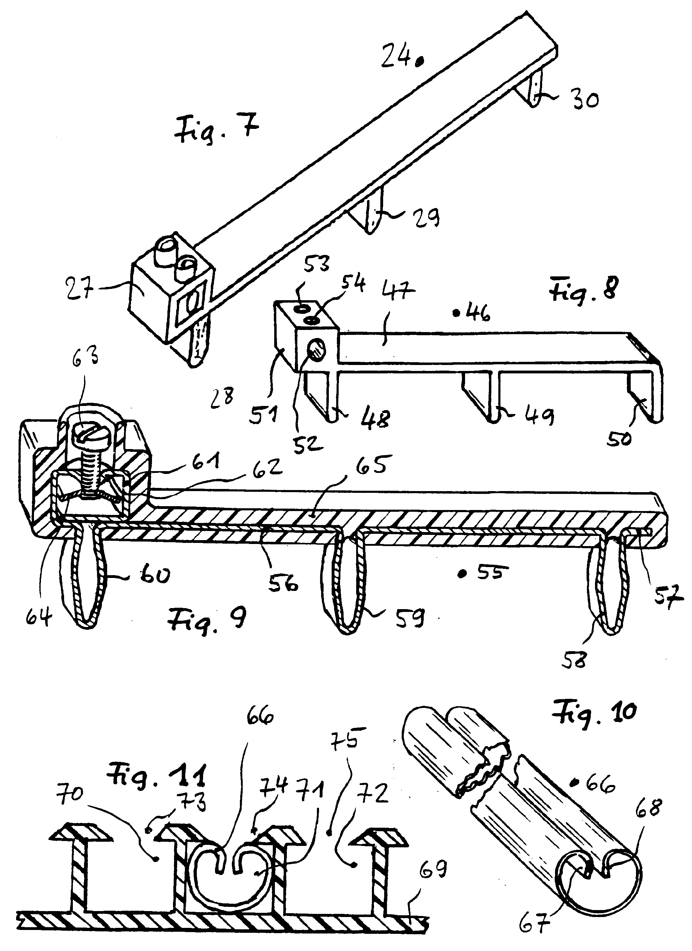

Die **Figur 5** veranschaulicht in zwei Einzeldarstellungen ein Steckorgan 37, dessen Ausgangsform von einem winkelförmigen Stanzteil aus einem Blech- oder Bandmaterial mit den Schenkeln 38 und 39 gebildet wird, siehe hierzu die in der Zeichnung oben stehende Darstellung der Figur 5. Dieses Steckorgan 37 mit zunächst völlig gleichebenig verlaufenden Schenkeln 38 und 39 wird sodann in einem Arbeitsgang verformt, wobei der eine Schenkel 39 unter Verdrillung des Eckbereiches um etwa 90° abgebogen wird, siehe hierzu die untere Darstellung der Figur 5. Hierdurch ergibt sich wieder eine Formgebung mit zwei Kontaktierungsbereichen, deren wesentliche Erstreckungsebenen praktisch gleich gelegen sind wie dieses beim Steckorgan 33 gemäß Figur 4 der Fall ist, siehe hierzu die oben stehenden Erläuterungen.

Wie in der Beschreibungseinleitung bereits angedeutet worden ist, können innerhalb einer Verteileranlage außer Installationsgeräten in einer Schmalbauweise und mit stets gleichgelegenen Anschlußstellen, wie dieses den Figuren 1 und 2 zu entnehmen ist, durchaus auch in ihrer Formgebung anders gestaltete Installationsgeräte angeordnet werden, deren Anschlußstellen häufig auch anders gelegen sind als bei den genannten Installationsgeräten in Schmalbauweise. Auch diese in ihrer Gestaltung von den übrigen Installationsgeräten abweichenden Installationsgeräte bedürfen einer Stromeinspeisung, wofür jedoch die zuvor erläuterten Steckorgane gemäß den Figuren 3 bis 5 nicht geeignet sind. Eine für solche Bedarfsfälle geeignete Lösung veranschaulicht die **Figur 6**. Diese zeigt ein Steckorgan 40 in Form einer kastenförmigen Schraubanschlußklemme, von der ein Messerkontakt 41 ausgeht. Dieser Messerkontakt 41 ist einstückig verbunden mit einem Schraubklemmenteil 42, welch letzteres von einem Isoliermantel 43 umgeben ist. In diesem Schraubklemmenteil 42 kann eine Litze 44 kontaktierend befestigt werden, die an ihrem freien Ende beispielsweise mit einem Kabelschuh 45 versehen sein kann. Letzterer dient dem Anschluß an einem Installationsgerät mit einer anders gelegenen Anschlußstelle, als dieses bei den Installationsgeräten 21 in Schmalbauweise der Fall ist. Über den Messerkontakt 41 ist dieses Steckorgan 40 mit einer Stromschiene 20 (siehe die Figuren 1 und 2) kontaktierend zusammensteckbar, in gleicher Weise, wie dieses für die Steckorgane gemäß den Figuren 3 bis 5 vorgesehen ist.

Nun zur **Figur 7** , die eine Steckbrücke 24 zeigt, wie sie im Zusammenhang mit den Erläuterungen zur Figur 2 bereits beschrieben worden ist. Sie weist eine im wesentlichen schienenförmige Gestaltung auf, und enthält an ihrem einem Längsende die weiter oben bereits erwähnte kastenförmige Schraubanschlußklemme 27. Von der der Schraubanschlußklemme 27 abgewandten Seite der schienenförmigen Gestalt gehen die ebenfalls bereits erwähnten Messerkontakte 28, 29 und 30 aus, was in dieser Darstellung besser erkennbar ist als in der Figur 2. Erwähnt hierzu sei noch, daß die genannten Messerkontakte 28, 29 und 30 nicht isoliert sind, der übrige Längsbereich dieser Steckbrücke 24 ist jedoch ringsum von einer Isolation umgeben, ausgenommen das Innere der Schraubanschlußklemme 27. Von Interesse ist es, wie der metallische Körper ohne die erwähnte Isolierummantelung gestaltet ist, weil dieses der Figur 7 nicht zu entnehmen ist; wohl aber der **Figur 8** . Diese zeigt ein vergleichsweise schmal abgelängtes Stück eines Strangpreßprofiles 46 aus einem metallischen Material, beispielsweise aus Kupfer oder aus Aluminium. Dieses Strangpreßprofil 46 hat eine im wesentlichen E-förmige Gestalt, nämlich einen langen Verbindungsschenkel 47, von dem senkrecht abstehende kurze Schenkel 48, 49 und 50 ausgehen. Diese letztgenannten Schenkel 48 bis 50 stellen die Messerkontakte dar, die in der Figur 7 mit den Ziffern 28 bis 30 versehen sind. Am in der Darstellung nach links weisenden Längsende des langen Verbindungsschenkels 47 ist ein im Querschnitt rechteckiger Formbereich 51 mit einer darin angeordneten Öffnung 52 vorgesehen. Vorzugsweise nach dem Ablängen des in der Figur 8 gezeigten Längsbereiches von einem Strangpreßprofil 46 werden - quer zur Öffnung 52 - ein oder mehrere Gewindebohrungen am rechteckigen Formbereich 51 angebracht, im vorliegenden Falle die Gewindebohrungen 53 und 54. Diese dienen der Aufnahme von Anschlußschrauben, um ein in die Öffnung 52 eingeführtes Kabel kontaktierend festklemmen zu können. Ein von dem Strangpreßprofil 46 abgetrennter Längsbereich, wie er dieser Figur 8 zu entnehmen ist, ist anschließend mit einem Isolierstoff zu ummanteln bzw. zu umspritzen, wie dieses bereits für die Steckbrücke 24 gemäß Figur 7 erläutert worden ist, d. h. also die kurzen Schenkel 48, 49 und 50 werden nicht mit ummantelt und auch die Stirnseiten des rechteckigen Formbereiches 51 müssen mindestens im Bereich der Öffnung 52 freibleiben von einer Kunststoffumspritzung. Letzteres gilt auch für die Gewindebohrungen 53 und 54, die allerdings von rohrstutzenartigen Kragen, wie dieses der Figur 7 zu entnehmen ist, umgeben sein können. Letztere können nicht nur als Berührungsschutz dienen, sondern auch als Führung für ein Schraubwerkzeug.

In der **Figur 9** ist ein Längsschnitt durch eine im übrigen perspektivisch dargestellte Steckbrücke 55 veranschaulicht. Von der in der Figur 7 gezeigten Steckbrücke 24 und deren metallischer Einlage in Gestalt des abgelängten Strangpreßprofiles 46 gemäß Figur 8 unterscheidet sich diese Steckbrücke durch eine andere Ausbildung der metallischen Einlage. Diese besteht nämlich aus einem entsprechend der Darstellung gewinkelten und gefalteten Metallband 56, dessen Längsverlauf, beginnend am in der Darstellung rechts gelegenen Endbereich 57, der Darstellung eindeutig zu entnehmen ist. Ausgehend von diesem Endbereich 57 wird durch weitgehendes Zusammenfalten ein Steckkontakt 58 geformt, nach einem längeren Streckenabschnitt in der Ebene des Endbereiches 57 wird ein weiterer Steckkontakt 59 ausgeformt und schließlich ein dritter Steckkontakt 60. Sodann wird durch viermaliges Abwinkeln ein Kontaktanschlußbereich 61 geformt, welcher mit ein oder zwei Durchzügen 62 und darin eingearbeiteten Schraubgewinden versehen wird. Hierdurch wird eine Art Kastenklemme gebildet, die dem Anschluß einer stromzuführenden Leitung dient. Erkennbar in diesem Kastenbereich sind eine Anschlußschraube 63, die an ihrem im Kasteninneren gelegenen Bereich mit einer dachförmigen Druckscheibe 64 ausgestattet ist. Dieses aus dem Metallband 56 hergestellte metallische Gebilde ist mit einer Isolierstoffisolation 65, wie dargestellt umspritzt, wobei jedoch die erwähnten Steckkontakte 58, 59 und 60 frei bleiben. Es muß nicht besonders erwähnt werden, daß auch die stirnseitigen Enden des kastenartigen Kontaktanschlußbereiches 61 ebenfalls frei und zugänglich sein müssen. Auf diese Weise ist eine Steckbrücke (55) geschaffen, die nahezu identisch derjenigen (24) ist, wie sie die Figur 7 zeigt. Eine Besonderheit dieser Steckbrücke 55 ist darin zu sehen, daß die durch Zusammenfalten des Metallbandes 56 gebildeten Steckkontakte 58 bis 60 in ihrem Inneren jeweils einen Hohlraum enthalten, was zur Folge hat, daß die also nicht aneinanderliegenden gefalteten Wandungen zueinander zu federn vermögen. Hierdurch ist eine besonders effektive Kontaktierung von Stromschienen möglich, insbesondere dann, wenn diese ein praktisch starres Querschnittsprofil aufweisen.

Die **Figur 10** veranschaulicht in perspektivischer Sicht eine Stromschiene 66, welche, anders als die Stromschienen in den Figuren 1 und 2, kein in sich starres Querschnittsprofil bildet. Vielmehr ist diese Stromschiene 66 aus einem in der Ausgangsform ebenen Blechmaterial geformt, derart, daß sie ein etwa herzformartiges Querschnittsprofil aufweist. Hierbei enden beide seitlichen Randungsbereiche 67 und 68 der ursprünglich ebenen Ausgangsform so, daß sie in das Profilinnere gerichtet sind und im übrigen voneinander einen Abstand aufweisen. Eine derartige Stromschiene (66) vermag in einem gewissen Ausmaß, nämlich dann, wenn in den verbleibenden Längsschlitz ein Messerkontakt eingefügt wird, auseinanderzufedern. In gleicher Weise läßt sich diese Stromschiene auch in einem gewissen Ausmaß zusammendrücken, derart, daß sie in eine zugangsseitig verengte Aufnahmetaschen eines Verteilersockels einfügbar ist.

Die Anordnung einer Stromschiene, wie sie eben erläutert und in der Figur 10 dargestellt worden ist, innerhalb einer Aufnahmetasche eines Verteilersockels zeigt die **Figur 11** . Diese stellt in gegenüber den Darstellungen in den Figuren 1 und 2 stärker vergrößertem Maßstab einen beidseitig abgebrochenen Bereich eines Verteilersockels 69 dar. In diesem Verteilersockel 69 sind Aufnahmetaschen 70, 71, 72 und, links und rechts hiervon, weitere Aufnahmetaschen gebildet. In der Darstellung nach oben gerichtet, weisen diese Aufnahmetaschen 70 bis 72 schlitzförmige Taschenöffnungen 73, 74 und 75 auf, die gegenüber dem übrigen Taschenquerschnitt - wie erkennbar - verengt sind. Dieses hat den Vorteil, daß eine in einer Aufnahmetasche gelegene Stromschiene, im vorliegenden Fall die Stromschiene 66 in der Aufnahmetasche 71, aus dieser nicht mehr ohne eine größere Kraftaufwendung entnommen werden und somit aus dieser Aufnahmetasche auch nicht herausfallen kann. Ist diese Stromschiene 66 so bemessen, daß sie nach dem Einfügen in ihrer zugeordneten Aufnahmetasche (71) an den seitlichen Taschenwandungen durch Federkraft haftet, so ist auch eine Verschiebung dieser Stromschiene 66 in ihrer Längsrichtung ohne einen gewissen Kraftaufwand nicht möglich.

Wie eingangs der Figurenbeschreibung bereits zum Ausdruck gebracht, veranschaulichen diese Figuren lediglich Ausführungsbeispiele des Erfindungsgegenstandes. Mannigfache Abweichungen von den dargestellten Ausführungsformen sind denkbar und auch durchaus realisierbar, ohne den Erfindungsgedanken zu verlassen. Diese möglichen Abwandlungen betreffen sowohl die Ausführungsmöglichkeit für Steckbrücken als auch für Steckkontakte und für einen Verteilersockel. Gleiches gilt für ein Steckorgan, wie es der Figur 4 zu entnehmen ist.

## Patentansprüche

1. Verteileranlage mit wenigstens zwei, vorzugsweise horizontal verlaufenden, untereinander angeordneten, jeweils auf einem Tragorgan (25) befestigten Reihen von elektrischen Installationsgeräten (21) in Schmalbauweise, deren Stromeinspeisung über ein isolierend abgestütztes Stromschienensystem und zugeordnete Steckorgane (22 ; 33 ; 37 ; 40) erfolgt, dadurch gekennzeichnet, daß für die Halterung des Stromschienensystem ein zwei oder mehreren Reihen von Installationsgeräten (21) gemeinsam dienender Verteilersockel (16, 69) vorgesehen ist, welcher mit vertikal bzw. quer zu den Installationsgeräte-Reihen verlaufenden Aufnahmetaschen (19; 70, 71, 72) und darin angeordneten Stromschienen (20; 66) ausgestattet ist, daß die Anzahl der Aufnahmetaschen in diesem Verteilersockel der höchstmöglichen Anzahl von in einer Reihe anordenbaren Installationsgeräten gleicht, und daß die kontaktierende Verbindung zwischen den einzelnen Installationsgeräten und den Stromschienen jeweils mittels eines gesonderten Steckorgans (22; 33; 37; 40) erfolgt, welches mit seinem einen Ende in eine Kontaktanschlußstelle (23) eines Installationsgerätes einfügbar und mit seinem anderen Ende mit der zugeordneten Stromschiene kontaktierend zusammensteckbar ist.

2. Verteileranlage nach Anspruch 1, dadurch gekennzeichnet, daß der Verteilersockel (16; 69) von einem entsprechend den jeweiligen Bedarf abgelängten Endlosprofil aus Isolierstoff gebildet ist, dessen Längsenden mit einer Abdeckung oder einer Kappe versehen sein können.

3. Verteileranlage nach Anspruch 2, dadurch gekennzeichnet, daß das Endlosprofil für die Bildung des Verteilersockels (16; 69) seitlich vorstehende, flanschartige Profilausformungen (17, 18) aufweist, die sowohl der Befestigung des Verteilersockels innerhalb der Verteileranlage (12), als auch der Befestigung von Tragorganen (25) für die Installationsgeräte (21) dienen können.

4. Verteileranlage nach einem der Ansprüche 1 bis 3, dadurch gekennzeichnet, daß die im Verteilersockel (16; 69) vorgesehenen Aufnahmetaschen (19; 70, 71, 72) für die Aufnahme von Stromschienen (20; 66) auf ihrer den zu kontaktierenden Installationsgeräten (21) zugewandten Seite jeweils eine den Durchtritt der Steckorgane dienende, sich über die gesamte Taschenlänge erstrekkende schlitzförmige Taschenöffnung (73, 74, 75) aufweisen, die gegenüber dem übrigen Taschenquerschnitt verengt ist.

5. Verteileranlage nach einem der Ansprüche 1 bis 4, dadurch gekennzeichnet, daß die Stromschienen (20) eine U-förmige oder C-förmige Querschnittskontur aufweisen.

6. Verteileranlage nach einem der Ansprüche 1 bis 4, dadurch gekennzeichnet, daß die Stromschienen (66) aus einem in der Ausgangsform ebenen Blechmaterial geformt sind und ein etwa herzformartiges Querschnittsprofil aufweisen, wobei beide seitlichen Randungsbereiche (67, 68) der Ausgangsform in das Profilinnere gerichtet enden und voneinander einen Abstand aufweisen. (Figur 10)

7. Verteileranlage nach einem der Ansprüche 1 bis 6, dadurch gekennzeichnet, daß die Steckorgane (22; 33; 37) zur kontaktierenden Verbindung zwischen einem Installationsgerät (21) und der zugeordneten Stromschiene (20; 66) eine weitgehend starre, etwa im Bereich ihrer Längsmitte abgewinkelte Formgebung aufweisen und mit ihrem einen freien Ende in die Kontaktanschlußstelle (23) einfügbar sowie mit ihrem anderen freien Ende mit einer zugeordneten Stromschiene (20; 66) zusammensteckbar sind.

8. Verteileranlage nach Anspruch 7, dadurch gekennzeichnet, daß die Steckorgane (22; 33) aus einem in Querschnitt runden oder quadratischen Ausgangsmaterial hergestellt sind, wobei die freien Enden zu abgeflachten oder verjüngten Kontaktierungsbereichen verformt sind.

9. Verteileranlage nach Anspruch 7, dadurch gekennzeichnet, daß die Steckorgane (37) in ihrer Ausgangsform winkelförmige Stanzteile aus einem Blech- oder Bandmaterial darstellen, deren einer Schenkel (39) anschließend - unter Verdrillung des Eckbereiches - um ca. 90° abgebogen ist.

10. Verteileranlage nach Anspruch 8 oder 9, dadurch gekennzeichnet, daß die wesentlichen Erstreckungsebenen der abgeflachten bzw. ebenen Kontaktierungsbereiche der Steckorgane (33; 37) senkrecht zueinander verlaufen, und zwar derart, daß - in montierter Lage - der dem Installationsgerät (21) zugeführte Kontaktierungsbereich parallel zur Befestigungsebene des Installationsgerätes verläuft, hingegen der einer Stromschiene (20; 66) zugeführte Kontaktierungsbereich sich parallel zu den seitlichen Wandungen des Installationsgerätes erstreckt.

11. Verteileranlage nach einem der Ansprüche 1 bis 6, dadurch gekennzeichnet, daß - insbesondere für die kontaktierende Verbindung von Stromschienen (20; 66) mit Installationsgeräten mit einer von der Gestalt der übrigen Installationsgeräte (21) abweichenden Gestaltung und Anschlußmöglichkeit - Steckorgane (40) in Form von kastenförmigen Schraubanschlußklemmen vorgesehen sind, von denen jeweils ein Messerkontakt (41) zur Kontaktierung einer Stromschiene ausgeht.

12. Verteileranlage nach einem der Ansprüche 1 bis 11, dadurch gekennzeichnet, daß zur Stromversorgung des Stromschienensystems Steckbrücken (24; 55) vorgesehen sind, die jeweils aus einer vorzugsweise in Gestalt einer kastenförmigen Schraubanschlußklemme (27; 61) gebildeten Anschlußstelle bestehen, welch letztere mit einem sich seitlich erstreckenden, schienenartigen Brückenglied (47) einstückig oder kontaktierend fest verbunden ist, von dem wenigstens zwei Messerkontakte (48, 49, 50) zur Kontaktierung von einer entsprechenden Anzahl von Stromschienen (20; 66) ausgehen.

13. Verteileranlage nach Anspruch 12, dadurch gekennzeichnet, daß vom Brückenglied (47) einer Steckbrükke (24) wenigstens drei Messerkontakte (48, 49, 50) ausgehen, die so voneinander beabstandet und positioniert sind, daß sie jeweils jede dritte Stromschiene (20; 66) des Stromschienensystems zu kontaktieren vermögen.

14. Verteileranlage nach Anspruch 12 oder 13, dadurch gekennzeichnet, daß die Steckbrücken (24; 55), ausgenommen die vorgesehenen Kontaktierungsbereiche (52, 53, 54; 61, 62) der Anschlußstelle und der Messerkontakte (48, 49, 50; 58, 59, 60), ringsum isolierstoffummantelt sind.

15. Verteileranlage nach einem der Ansprüche 12 bis 14, dadurch gekennzeichnet, daß sowohl die Anschlußstelle (61), als auch das Brückenglied, als auch schließlich die Messerkontakte (58, 59, 60) aus einem einzigen Metallband (56) (z. B. aus einem Kupfer- oder Aluminiumband) hergestellt sind, welches entsprechend abgewinkelt und gefaltet und sodann mit einem Isolierstoffmantel (65) umspritzt ist. (Figur 9)

16. Verteileranlage nach Anspruch 15, dadurch gekennzeichnet, daß die Bandbereiche der durch Zusammenfalten des Metallbandes gebildeten einzelnen Messerkontakte (58, 59, 60) nicht unmittelbar aneinanderliegen, sondern einen Abstand voneinander in der Größenordnung von etwa einem Viertel bis etwa zum Dreifachen der Banddicke aufweisen und um diesen Betrag - ohne sich zu verformen - federnd zueinander verbiegbar bzw. zusammendrückbar sind.

17. Verteileranlage nach einem der Ansprüche 1 bis 16, dadurch gekennzeichnet, daß - abweichend vom Kennzeichen des Anspruches 1 - zur Vergrößerung der Anzahl von in einer Reihe anordenbaren Installationsgeräten zwei oder mehrere Verteilersockel (16; 69) nebeneinanderliegend vorgesehen sind.

## Claims

1. Distribution installation having at least two rows, which preferably run horizontally, are arranged one below another and are in each case mounted on a supporting device (25), of electrical installation apparatuses (21) which are of narrow construction and are supplied with power via a busbar system, which is supported in an insulating manner, and associated plug-in devices (22; 33; 37; 40), characterized in that a distributor base (16, 69) is provided for holding the busbar system, is used jointly by two or more rows of installation apparatuses (21) and is equipped with retaining pockets (19; 70, 71, 72), which run vertically or transversely with respect to the rows of installation apparatuses, and with busbars (20; 66) arranged in said retaining pockets (19; 70, 71, 72), in that the number of retaining pockets in this distributor base equals the maximum possible number of installation apparatuses which can be arranged in a row, and in that the contact-making connection between the individual installation apparatuses and the busbars is in each case made by means of a separate plug-in device (22; 33; 37; 40) whose one end can be inserted into a contact connection point (23) of an installation apparatus and whose other end can be plugged into the associated busbar such that the contact is made.

2. Distribution installation according to Claim 1, characterized in that the distributor base (16; 69) is formed from an endless profile which is cut to length in accordance with the respective requirements, is made of insulating material and whose longitudinal ends can be provided with a cover or with a cap.

3. Distribution installation according to Claim 2, characterized in that the endless profile has laterally projecting, flange-like profile formed-out regions (17, 18) in order to form the distributor base (16; 69), which profile formed-out regions (17, 18) can be used both for mounting the distributor base within the distribution installation (12) and for fastening support devices (25) for the installation apparatuses (21).

4. Distribution installation according to Claims 1 to 3, characterized in that the retaining pockets (19; 70, 71, 72) which are provided in the distributor base (16; 69) each have a slot-shaped pocket opening (73, 74, 75) on their side facing the installation apparatuses (21) with which contact is to be made, which openings (73, 74, 75) are provided for accommodating busbars (20; 66), are used for the plug-in devices to pass through, extend over the entire pocket length and are narrower than the rest of the pocket cross-section.

5. Distribution installation according to one of Claims 1 to 4, characterized in that the busbars (20) have a U-shaped or C-shaped cross-sectional contour.

6. Distribution installation according to one of Claims 1 to 4, characterized in that the busbars (66) are produced from a sheet-metal material, which is flat in the original form, and have an approximately cardioid cross-sectional profile, both lateral edge regions (67, 68) of the original form ending directed into the profile interior and being at a distance from one another. (Figure 10)

7. Distribution installation according to one of Claims 1 to 6, characterized in that the plug-in devices (22; 33; 37) have a largely rigid shape, which is bent approximately in the region of its longitudinal centre, for contact-making connection between an installation apparatus (21) and the associated busbar (20; 66), one free end of each of said plug-in devices (22; 33; 37) can be inserted into the contact connecting point (23), and the other free end can be plugged to an associated busbar (20; 66).

8. Distribution installation according to Claim 7, characterized in that the plug-in devices (22; 33) are produced from an original material of round or square cross-section, the free ends being deformed to create flattened or tapered contact-making regions.

9. Distribution installation according to Claim 7, characterized in that the plug-in devices (37) represent stamped parts, which consist of sheet-metal or strip material, and whose original form is angled, and one limb (39) of which is subsequently - by twisting the corner region - bent through approximately 90°.

10. Distribution installation according to Claim 8 or 9, characterized in that the major planes of extent of the flattened or flat contact-making regions of the plug-in devices (33; 37) run at right angles to one another, to be precise in such a manner that - in the assembled position - that contact-making region which is supplied to the installation apparatus (21) runs parallel to the mounting plane of the installation apparatus while, in contrast, that contact-making region which is supplied to a busbar (20; 66) extends parallel to the lateral walls of the installation apparatus.

11. Distribution installation according to one of Claims 1 to 6, characterized in that plug-in devices (40) are provided - especially for the contact-making connection of busbars (20; 66) to installation apparatuses having a design and connection capability which deviates from the design of the other installation apparatuses (21) - in the form of box-shaped screw connecting terminals, from which in each case one blade contact (41) originates in order to make contact with a busbar.

12. Distribution installation according to one of Claims 1 to 11, characterized in that plug-in links (24; 55) are provided in order to provide power to the busbar system, which plug-in links (24; 55) each consist of a connecting point which is preferably constructed as a box-shaped screw connecting terminal (27; 61) and is firmly connected, integrally or such that contact is made, to a link element (47) which extends laterally, is like a bar, and from which at least two blade contacts (48, 49, 50) originate in order to make contact with a corresponding number of busbars (20; 66).

13. Distribution installation according to Claim 12, characterized in that at least three blade contacts (48, 49, 50) originate from the link element (47) of a plug-in link (24) and are at such a distance from one another, and are positioned, such that it is possible to make a contact with every third busbar (20; 66) of the busbar system in each case.

14. Distribution installation according to Claim 12 or 13, characterized in that the plug-in links (24; 55) are sheathed with insulating material all round, except for the contact-making regions (52, 53, 54; 61, 62) of the connecting point and of the blade contacts (48, 49, 50; 58, 59, 60), which are provided.

15. Distribution installation according to one of Claims 12 to 14, characterized in that both the connecting point (61) and the link element, as well as, finally, the blade contacts (58, 59, 60) are provided from a single metal strip (56) (for example, of a copper or aluminium strip), which is suitably bent and folded and is then extrusion coated with an insulating material sheath (65). (Figure 9)

16. Distribution installation according to Claim 15, characterized in that the strip regions of the individual blade contacts (58, 59, 60), which are formed by folding up the metal strip, do not rest directly against one another but are at a distance from one another in the order of magnitude from approximately a quarter of, to approximately three times, the strip thickness and can be bent or compressed towards one another in a sprung manner, through this amount - without being deformed.

17. Distribution installation according to one of Claims 1 to 16, characterized in that in contrast to the characterizing part of Claim 1, two or more distributor bases (16; 69) are arranged side by side in order to increase the number of installation apparatuses which can be arranged in a row.

## Revendications

1. Installation de distribution comprenant des appareils électriques d'installation (21) du type étroit qui sont disposés en au moins deux rangées, de préférence horizontales, situées l'une en-dessous de l'autre et fixées chacune sur un organe de support (25), et dont l'alimentation en courant s'effectue par un système de barres de courant supportées de façon isolée, et par des organes à enfichage (22; 33; 37; 40) associés, caractérisée par le fait que pour supporter le système de barres de courant, il est prévu un socle de distributeur (16, 69) commun à deux ou plusieurs rangées d'appareils d'installation (21) et équipé d'alvéoles de réception (19; 70; 71; 72) s'étendant verticalement ou transversalement aux rangées d'appareils d'installation, et de barres de courant (20; 66) disposées dans ces alvéoles, que le nombre des alvéoles de réception dans ce socle de distributeur est égal au nombre maximal possible d'appareils d'installation pouvant être disposés en une rangée, et que la liaison de contact entre les différents appareils d'installation et les barres de courant s'effectue respectivement au moyen d'un organe à enfichage (22; 33; 37; 40) séparé dont une extrémité peut être insérée dans un emplacement de raccordement de contact (23) d'un appareil d'installation et dont l'autre extrémité peut coopérer par enfichage avec contact avec la barre de courant associée.

2. Installation de distribution suivant la revendication 1, caractérisée par le fait que le socle de distributeur (16; 69) est formé d'un profilé sans fin en matière isolante, qui est coupé à longueur en fonction des besoins et dont les extrémités longitudinales peuvent être munies d'un élément de recouvrement ou coiffe.

3. Installation de distribution suivant la revendication 2, caractérisée par le fait que le profilé sans fin présente, pour la formation du socle de distributeur (16; 69), des parties (17, 18) en forme d'ailes, faisant saillie latéralement, pouvant servir aussi bien à la fixation du socle de distributeur à l'intérieur de l'installation de distribution (12) qu'à la fixation d'organes de support (25) pour les appareils d'installation (21).

4. Installation de distribution suivant l'une des revendications 1 à 3, caractérisée par le fait que les alvéoles de réception (19; 70, 71, 72) prévues dans le socle de distributeur (16; 69) présentent, pour recevoir les barres de courant (20; 66), sur leur côté tourné vers les appareils d'installation (21) avec lesquels le contact doit être établi, chacune une ouverture d'alvéole (73, 74, 75) en forme de fente, qui s'étend sur toute la longueur de l'alvéole, qui sert au passage des organes d'enfichage et qui présente une section rétrécie par rapport à la section restante de l'alvéole.

5. Installation de distribution suivant l'une des revendications 1 à 4, caractérisée par le fait que les barres de courant (20) présentent un profil en U ou en C.

6. Installation de distribution suivant l'une des revendications 1 à 4, caractérisée par le fait que les barres de courant sont formées à partir de tôle de forme initialement plane et présentent un profil à peu près en forme de coeur, les deux zones marginales latérales (67, 68) de la forme initiale étant dirigées vers l'intérieur du profil et se trouvant à distance l'une de l'autre (figure 10).

7. Installation de distribution suivant l'une des revendications 1 à 6, caractérisée par le fait que les organes à enfichage (22; 33, 37) pour la liaison de contact entre un appareil d'installation (21) et la barre de courant (20; 66) associée sont de conformation essentiellement rigide, avec un coude à peu près dans la zone du milieu de leur longueur, l'une de leurs extrémités libres pouvant être insérée dans l'emplacement de raccordement de contact (23) et leur autre extrémité libre pouvant coopérer par enfichage avec une barre de courant (20; 66) associée.

8. Installation de distribution suivant la revendication 7, caractérisée par le fait que les organes à enfichage (22; 33) sont fabriqués à partir d'un matériau de départ de profil rond ou carré, les extrémités libres étant déformées pour constituer des zones de contact aplaties ou effilées.

9. Installation de distribution suivant la revendication 7, caractérisée par le fait que les organes à enfichage (37) représentent, dans leur forme initiale, des pièces en équerre découpées dans de la tôle ou un matériau en bande, dont une branche (39) est ensuite pliée à environ 900, avec torsion dans la zone du coude.

10. Installation de distribution suivant la revendication 8 ou 9, caractérisée par le fait que les plans dans lesquels s'étendent principalement les zones de contact aplaties ou planes des organes à enfichage (33; 37) sont perpendiculaires l'un à l'autre, de telle manière qu'en position montée, la zone de contact amenée à coopérer avec l'appareil d'installation (21) s'étende parallèlement au plan de fixation de l'appareil d'installation, tandis que la zone de contact amenée à coopérer avec une barre de courant (20; 66) s'étende parallèlement aux parois latérales de l'appareil d'installation.

11. Installation de distribution suivant l'une des revendications 1 à 6, caractérisée par le fait qu'en particulier pour la liaison de contact de barres de courant (20; 66) avec des appareils d'installation présentant une conformation et une possibilité de raccordement qui diffèrent de celles des autres appareils d'installation (21), il est prévu des organes à enfichage (40) sous la forme de bornes de raccordement à vis en forme de caisson, sur chacune desquelles fait saillie une lame de contact (21) en vue du contact avec une barre de courant.

12. Installation de distribution suivant l'une des revendications 1 à 11, caractérisée par le fait que pour l'alimentation en courant du système de barres de courant, il est prévu des ponts à enfichage (24; 55) qui comprennent chacun un emplacement de raccordement conçu sous la forme d'une borne de raccordement à vis (27; 61) en forme de caisson et réalisé d'une seule pièce ou relié rigidement avec contact avec un élément de pont (47) en forme de barre, s'étendant latéralement, élément sur lequel font saillie au moins deux lames de contact (48, 49, 50) en vue du contact avec un nombre correspondant de barres de courant (20; 66).

13. Installation de distribution suivant la revendication 12, caractérisée par le fait que sur l'élément de pont (47) d'un pont à enfichage (24) font saillie au moins trois lames de contact (48, 49, 50) qui sont espacées les unes des autres et positionnées de manière à pouvoir établir chacune un contact avec chaque troisième barre de courant (20; 66) du système de barres de courant.

14. Installation de distribution suivant la revendication 12 ou 13, caractérisée par le fait que les ponts à enfichage (24; 55) sont gainés de matière isolante sur tout le pourtour, excepté dans les zones de contact prévues (52, 53, 54; 61, 62) de l'emplacement de raccordement et des lames de contact (48, 49, 50; 58, 59, 60).

15. Installation de distribution suivant l'une des revendications 12 à 14, caractérisée par le fait qu'aussi bien l'emplacement de raccordement (61) que l'élément de pont et les lames de contact (58, 59, 60) sont fabriqués à partir d'une même bande métallique (56) (par exemple une bande de cuivre ou d'aluminium) qui est coudée, pliée et ensuite revêtue par moulage d'une gaine de matière isolante (figure 9).

16. Installation de distribution suivant la revendication 15, caractérisée par le fait que les zones de la bande correspondant aux différentes lames de contact (58, 59, 60) formées par pliage de la bande métallique ne sont pas directement en contact l'une avec l'autre, mais présentent une distance réciproque comprise entre environ un quart et environ le triple de l'épaisseur de la bande et peuvent, sans se déformer, être élastiquement rapprochées ou comprimées de cette valeur.

17. Installation de distribution suivant l'une des revendications 1 à 16, caractérisée par le fait que, contrairement à la partie caractérisante de la revendication 1, deux ou plusieurs socles de distributeur (16; 69) sont disposés côte-à-côte, en vue de l'augmentation du nombre d'appareils d'installation pouvant être disposés en une rangée.
